Europäisches Patentamt

European Patent Office

Office européen des brevets

(19)

(11) Veröffentlichungsnummer: **0 224 187**

**A2**

(12) # EUROPÄISCHE PATENTANMELDUNG

(21) Anmeldenummer: **86116007.5**

(22) Anmeldetag: **18.11.86**

(51) Int. Cl.⁴: **G06F 3/00**

(30) Priorität: **18.11.85 DE 3540878**
**07.03.86 DE 3607549**

(43) Veröffentlichungstag der Anmeldung:
**03.06.87 Patentblatt 87/23**

(84) Benannte Vertragsstaaten:
**AT CH ES FR GB IT LI NL SE**

(71) Anmelder: **F.H. Papenmeier GmbH & Co. KG**
**Talweg 2**
**D-5840 Schwerte 1(DE)**

(72) Erfinder: **Bornschein, Hans-Jürgen,**
**Ing.(grad.)-Phys.**
**Thomas-Mann-Strasse 10**
**D-5840 Schwerte(DE)**

(74) Vertreter: **Marx, Lothar, Dr. et al**
**Patentanwälte Schwabe, Sandmair, Marx**
**Stuntzstrasse 16 Postfach 86 02 45**
**D-8000 München 80(DE)**

(54) **Informationsabnahmesystem für eine Datenverarbeitungsanlage.**

(57) Das Informationsabnahmesystem einer Datenverarbeitungsanlage zur Gewinnung auditive, visuelle und/oder taktile Informationen für sehbehinderte Schreibkräfte darstellender elektrischer Signale weist ein Interface auf, das in den Daten-Bus eines elektronischen Rechners oder eines Schreibautomaten "hineinhorcht", also die übertragenen Daten praktisch leistungslos ohne Beeinflussung des Betriebes der Datenverarbeitungsanlage abtastet und dem Sehbehinderten-Endgerät zuführt, wo sie in visueller, auditiver und/oder taktiler Weise dargestellt werden. Es ist keine spezielle Modifikation der Hardware und/oder Software der Datenverarbeitungsanlage, also des Schreibautomaten oder des elektronischen Rechners, erforderlich.

FIGUR 1

ELEKTRONISCHER RECHNER

INTERFACE

SEHBEHINDERTEN-ENDGERÄT

EP 0 224 187 A2

# Informationsabnahmesystem für eine Datenverarbeitungsanlage

Die Erfindung betrifft ein Informationsabnahmesystem für eine Datenverarbeitungsanlage zur Gewinnung auditive, visuelle und/oder taktile Informationen für sehbehinderte Schreibkräfte darstellender elektrischer Signale der im Oberbegriff des Anspruchs I angegebenen Gattung.

Es sind verschiedene Informationssysteme für Datenverarbeitungsanlagen, insbesondere elektrische Schreibautomaten oder elektronische Rechner, beispielsweise Personal-Computer, entwickelt worden, die elektrische Signale in einer Darstellungsform liefern, die von sehbehinderten Schreibkräften wahrgenommen werden kann, also je nach dem Grad der Sehbehinderung in visueller, auditiver und/ oder taktiler Form.

Diese Informationsabnahmesysteme werden als Erweiterung der vorhandenen Hardware eines elektrischen Schreibautomaten oder eines Elektronenrechners realisiert und weisen ein Interface auf, das mit dem Datenbus des Schreibautomaten oder des Elektronenrechners verbunden ist; für die einwandfreie Funktion dieses Interfaces ist jedoch eine Modifikation der Software des Schreibautomaten oder des Elektronenrechners erforderlich, damit die Zeichen bzw. Steuerinformationen, beispielsweise Statusmeldungen, von den der Sehbehinderung der Bedienungsperson entsprechenden Endgeräten auditiv, visuell oder taktil dargestellt werden können. Der Nachteil bei der Verwendung eines solchen Interface, das meist als steckbare Platine in dem Gehäuse des Schreibautomaten, des Elektronenrechners oder der Tastatur des Elektronenrechners untergebracht ist, liegt darin, daß in aller Regel auch die Betriebs-Software des Schreibautomaten bzw. des Elektronenrechners modifiziert werden muß; dies führt dazu, daß in den meisten Fällen die preiswert erhältliche, in großer Vielfalt zur Verfügung stehende Standard-Software des Elektronenrechners bzw. des Schreibautomaten nicht mehr einwandfrei läuft.

Der Erfindung liegt deshalb die Aufgabe zugrunde, ein Informationsabnahmesystem für eine Datenverarbeitungsanlage der angegebenen Gattung zu schaffen, bei der die oben erwähnten Nachteile nicht mehr auftreten.

Insbesondere soll ein Informationsabnahmesystem vorgeschlagen werden, bei dem auch ohne Modifikation der üblichen, bewährten Software der Datenverarbeitungsanlage, insbesondere eines Schreibautomaten oder eines elektronischen Rechners, mit geringem apparativ/ elektronischem Aufwand Signale für die auditive, visuelle und/der taktile Darstellung der Daten, Zeichen und/oder Statusmeldungen gewonnen werden können.

Diese Aufgabe wird durch die im kennzeichnenden Teil des Anspruchs I angegebenen Merkmale gelöst.

Zweckmäßige Ausführungsformen werden durch die Merkmale der Unteransprüche definiert.

Die mit der Erfindung erzielten Vorteile beruhen insbesondere darauf, daß das Informationsabnahmesystem über den Datenbus der Datenverarbeitungsanlage, insbesondere eines Schreibautomaten oder eines elektronischen Rechners, so in deren Datenfluß "hineinhorcht", daß die Abtastung dieser Daten und ihre Weiterleitung an das Sehbehinderten-Endgerät vom elektronischen System der Datenverarbeitungsanlage selbst nicht registriert wird, d.h., während der Abtastung dieser Daten über das Interface läuft der Betrieb der Datenverarbeitungsanlage ungestört weiter. Dabei ist keine spezielle Modifikation der üblichen Standard-Software der Datenverarbeitungsanlage erforderlich, d.h., alle üblichen, bewährten Programme, die für diese Maschinen, insbesondere auch für Personal-Computer, entwickelt wurden, bleiben unverändert lauffähig, so daß keine zusätzlichen Kosten für die Modifikation der erhältlichen Standard-Software entstehen.

Dieses "Abhorchen" der Daten auf dem Datenbus der Datenverarbeitungsanlage erfolgt zweckmäßigerweise durch leistungsloses Abtasten dieses Datenflusses zur Erzeugung von entsprechenden elektrischen Signale, die wiederum auf das angeschlossene Sehbehinderten-Endgerät gegeben werden und dort in auditiver, visueller und/oder taktiler Form dargestellt werden, d.h., der Sehbehinderte kann den Datenfluß der Datenverarbeitungsanlage direkt übernehmen -und nutzen. Bei den hier interessierenden Daten handelt es sich im wesentlichen um Zeichen und/der Statusmeldungen.

Die Erfindung wird im folgenden anhand von Ausführungsbeispielen unter Bezugnahme auf die beiliegenden, schematischen Zeichnungen näher erläutert. Es zeigen:

Fig. I ein Blockschaltbild eines Informationsabnahmesystems für eine Personal-Computer PC, der an ein Sehbehinderten-End gerät mit taktilem Ausgang angeschlossen ist, und

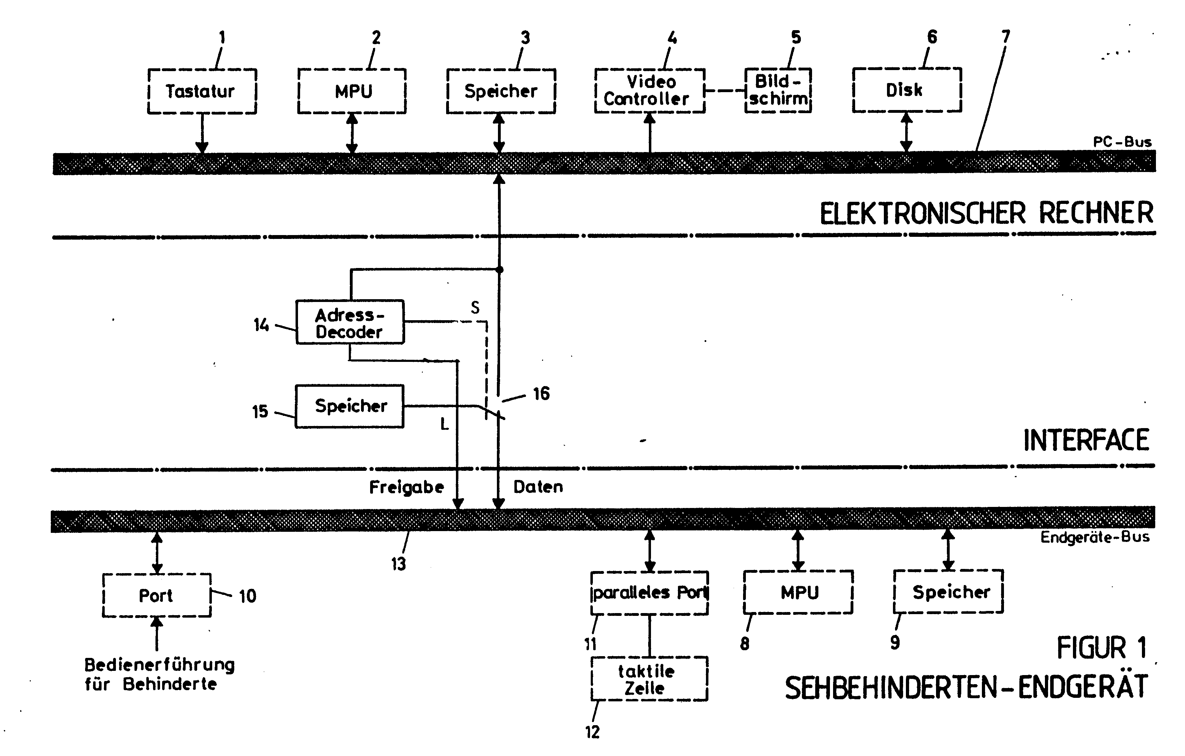

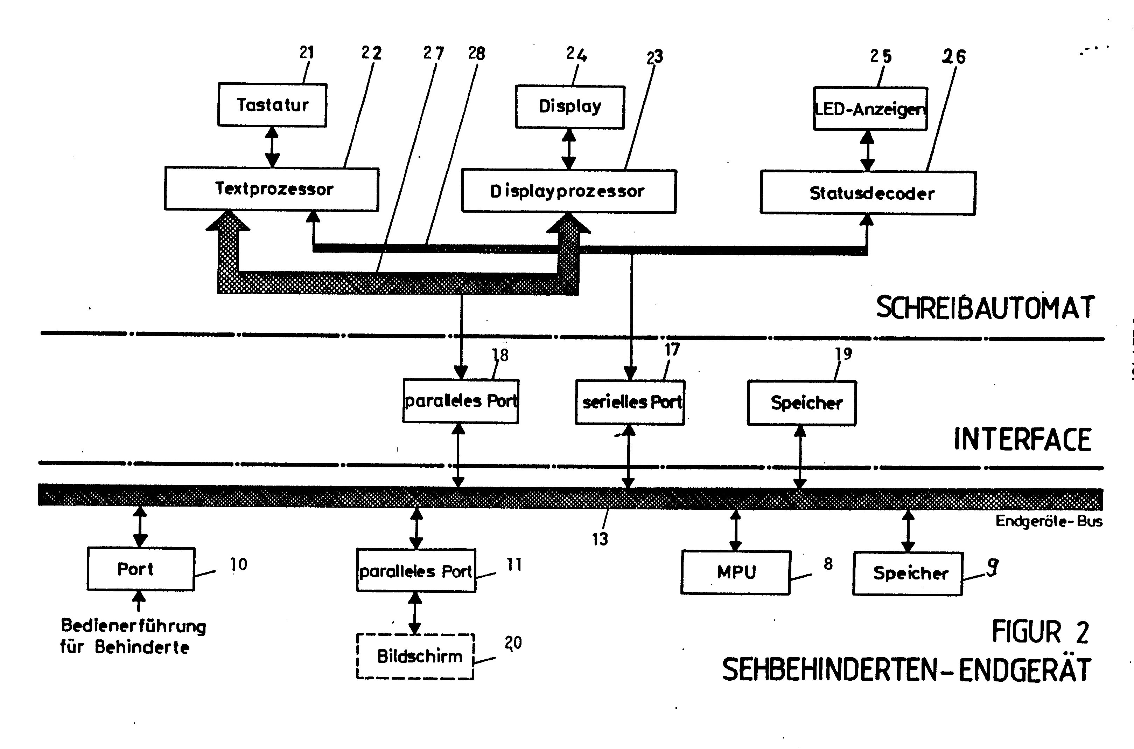

Fig. 2 ein Informationsabnahmesystem für einen Schreibautomaten, der an ein Sehbehinderten-Endgerät mit visuellem Ausgang, nämlich einem Bildschirm, angeschlossen ist.

Fig. I zeigt in Form eines Blockschaltbildes einen elektronischen Rechner, nämlich einen Personalcomputer PC mit einem PC-Bus, der über ein Interface an ein Sehbehinderten-Endgerät mit taktilem Ausgang angeschlossen ist. Der elektronische Rechner weist die üblichen Hauptstufen, nämlich eine Tastatur I für die Eingabe von Daten, Zeichen und Steuerbefehlen, einen Mikroprozessor (MPU)2, einen Speicher 3, einen Videocontroller 4 für die Steuerung eines Bildschirmes 5 und eine als Massenspeicher dienende Disketten station 6 auf. Diese Komponenten sind in der aus Fig. I ersichtlichen Weise direkt an den PC-Bus 7 angeschlossen.

Der elektronische Rechner ist über ein Interface mit dem Sehbehinderten-Endgerät verbunden, das ebenfalls die üblichen Komponenten enthält, nämlich einen Mikroprozessor (MPU) 8, einen Speicher 9, ein Port I0 für die Bedienerführung für den Sehbehinderten, ein paralleles Port II und eine taktile Zeile, mit der die Zeichen zeilenweise durch vorstehende Stife im Braille-Format dargestellt werden.

Das Interface enthält einen Adress-Decoder I4, der direkt mit dem PC-Bus 7 verbunden ist. Außerdem gibt es über den Umschalter I6 eine Verbindung zum PC-Bus 7 mit dem Speicher I5. Der Umschalter I6 wird von dem Adressdecoder I4 angesteuert, wie in Fig. I durch die Steuerleitung S angedeutet ist.

Die Eingabe von Daten erfolgt in der üblichen Weise vom Bediener des Personalcomputers PC über die Tastatur I. Auch der Datenfluß bzw. die Datensteuerung erfolgt in der für einen solchen Personalcomputer üblichen Weise, so daß sie nicht nochmals erläutert werden muß.

Erfolgt ein Zugriff des elektronischen Rechners auf seinen Video-Controller 4 für die Ansteuerung des Bildschirms 5, so erkennt dies der Adressdecoder I4. Es ensteht ein Ansteuerbefehl für den Umschalter I6. Bei einem Zugriff des elektronischen Rechners auf seinen Videocontroller 4 wird somit der Speicher I5 des Interface auf den PC-Bus 7 geschaltet. Die entsprechenden Video-Daten, werden im Speicher I5 des Interface somit parallel wie die Daten im Video-Controller gespeichert.

Wird der Zugriff auf den Videocontroller 4 des elektronischen Rechners beendet, so wird der Umschalter I6 von dem Adressdecoder I4 zurückgeschaltet und dadurch der Speicher I5 wieder mit dem Endgeräte-Bus I3 verbunden. Die Zugriffe vom Interface auf den PC-Bus 7 sind jedoch vorrangig.

Die Video-Daten des elektronischen Rechners werden praktisch leistungslos, d.h. hochohmig abgegriffen, so daß sie den Betrieb des elektronischen Rechners nicht stören, und im Speicher I5 gespeichert. Dieser Speicher steht nach Beendigung des Zugriffes auf den Videocontroller 4 dem Sehbehinderten Endgerät zur Verfügung. Eine Freigabeleitung L vom Adressdecoder teilt dem Endgerät die Stellung des Umschalters mit.

Auf dem Sehbehinderten-Endgerät werden die Daten von dem Speicher I5 dem Sehbehinderten über seine Bedienerführung über das Parallel-Port II auf der taktilen Zeile I2 dargestellt.

Für den Nicht Sehbehinderten erfolgen die Datenbewegungen weiterhin auf dem Bildschirm 5 des elektronischen Rechners, d. h., er kann die entsprechenden Daten ablesen.

Fig. 2 zeigt eine Ausführungsform eines Informationsabnahmesystems, bei dem das Sehbehinderten-Endgerät keine taktile Zeile I2, sondern stattdessen einen Bildschirm 20 für eine an die Sehbehinderung angepaßte visuelle Darstellung enthält. Im übrigen hat das Sehbehinderten-Endgerät den bereits aus Fig. I ersichtlichen Aufbau und ist über ein Interface an einen herkömlichen elektrischen Schreibautomaten angeschlossen.

Dieser Schreibautomat weist eine Tastatur 2I, einen Textprozessor 22, einen Displayprozessor 23 für die Ansteuerung eines Display 24, entweder eines Zeilendisplay oder eines Bildschirms, eine LED-Anzeige 25 und einen Status-Decoder 26 auf; der Textprozessor 22 ist mit dem Displayprozessor 23 über den Displayprozessor Bus 27 und über den Status-Anzeigebus 28 mit dem Statusdecoder 26 verbunden.

Das Interface zwischen dem elektrischen Schreibautomaten und dem Sehbehinderten-Endgerät weist ein serielles Port I7, ein paralleles Port I8 und einen Speicher I9 auf, der im wesentlichen dem Speicher I5 bei der Ausführungsform nach Fig. I entspricht.

Das parallele Port I8 des Interface liegt zwischen dem Diisplay-Prozessor-Bus 7 und dem Endgeräte-Bus I3, während das serielle Port I7 zwischen den Statusanzeigebus I8 und den Endgeräte-Bus I3 geschaltet ist. Der Speicher I9 ist direkt an den Endgeräte-Bus I3 angeschlossen.

Sobald Daten über den Displayprozessor-Bus 27 zwischen dem Textprozessor 22 und dem Displayprozessor 23 ausgetauscht werden, also Daten, die auf dem Display 24 dargestellt werden sollen, nimmt das Interface über das parallele Port I8 diese Daten ab und führt sie dem Endgerätebus zu, um sie im Speicher I9 abzulegen.

In entsprechender Weise werden die Statusanzeigen, die auf dem Statusanzeige-Bus I8 zwischen dem Textprozessor 22 und dem Statusdecoder 26 übermittelt werden, von dem seriellen Port I7 abgenommen und dem Endgeräte-Bus I3 zugeführt, um sie wiederum im Speicher I9 abzulegen.

Alle für das Sehbehinderten-Endgerät wesentlichen Daten des elektrischen Schreibautomaten werden also über das Interface parallel bzw. seriell in das Sehbehinderten-Endgerät übernommen. Die Übernahme der Daten, die auf dem Displayprozessor-Bus 7 und dem Statusanzeige-Bus 8 bewegt werden, erfolgt mit Vorrang in den Speicher l9, hierbei jedoch ohne besondere Ausdecodierung von Adressen, da alle Daten auf diesen Bussen für das Sehbehinderten-Endgerät wichtig sind.

Die Datenbewegungen werden dem Sehbehinderten hier über eine Bedienerführung aus dem Speicher l9 des Interface über das parallele Port ll auf dem Bildschirm 20 dieses visuellen Sehbehinderten-Endgerätes in Großschrift dargestellt, so daß Sehbehinderte mit Rest-Sehkraft die Daten ablesen und weiterverarbeiten können.

## Ansprüche

l. Informationsabnahmesystem für eine Datenverarbeitungsanlage insbesondere einen elektrischen Schreibautomaten oder einen elektronischen Rechner, zur Gewinnung auditive, visuelle und/oder taktile Informationen für Sehbehinderte Schreibkräfte darstellender elektrischer Signale

a) mit einem Interface, das einserseits an die Datenverarbeitungsanlagen und andererseits an ein Sehbehinderten-Endgerät angeschlossen ist, **gekennzeichnet** durch die folgenden Merkmale:

b) das an den Bus (l3) des Sehbehinderten-Endgerätes einerseits und mindestens einen Daten-Bus (7; 27, 28) der Datenverarbeitungsanlage angeschlossene Interface nimmt die auf dem Daten-Bus (7; 27, 28) übertragenen Daten praktisch leistungslos ab und übermittelt sie dem Daten-Bus (l3) des Sehbehinderten-Endgerätes zur Darstellung in visueller, auditiver und/oder taktiler Form.

2. Informationsabnahmesystem nach Anspruch l, dadurch gekennzeichnet, daß das Interface einen Speicher (l5; l6) für die Daten enthält, zu dem der Bus (7; 27, 28) der Datenverarbeitungsanlage einerseits und der Bus (l3) des Sehbehinderten-Endgerätes andererseits direkten Zugriff haben.

3. Informationsabnahmesystem nach einem der Ansprüche l oder 2, dadurch gekennzeichnet, daß das Interface den Zugriff vom Bus (7; 27, 28) der Datenverarbeitungsanlage zu dem Speicher (l5, l9) mit dem Zugriff des Busses (l3) des Sehbehinderten-Endgerätes synchronisiert.

4. Informationsabnahmesystem nach einem der Ansprüche l bis 3, dadurch gekennzeichnet, daß das Interface an den Daten-Bus (7) eines elektronischen Rechners, insbesondere eines Personal-Computers, angeschlossen ist und die Daten abnimmt, die dem Videocontroller (4) des elektronischen Rechners zugeführt werden.

5. Informationsabnahmesystem nach Anspruch 5, dadurch gekennzeichnet, daß das Interface einen Adressdecoder (l4) aufweist, der bei einem Zugriff des elektronischen Rechners auf seinen Videocontroller (4) den Speicher (l5) des Interface mit dem Daten-Bus (7) des elektronischen Rechners verbindet.

6. Informationsabnahmesystem nach einem der Ansprüche l bis 4, dadurch gekennzeichnet, daß ein paralleles Port (l8) des Interface einerseits mit dem Displayprozessor-Bus (7) eines elektrischen Schreibautomaten und andererseits mit dem Daten-Bus (l3) des Sehbehinderten-Endgerätes verbunden ist.

7. Informationsabnahmesystem nach einem der Ansprüche l bis 6, dadurch gekennzeichnet, daß ein serielles Port (l7) des Interface einerseits mit einem Statusanzeige-Bus (28) eines elektrischen Schreibautomaten und andererseits mit dem Daten-Bus (l3) des Sehbehinderten-Endgerätes verbunden ist.

8. Informationsabnahmesystem nach einem der Ansprüche 6 oder 7, dadurch gekennzeichnet, daß das Interface einen Speicher (l9) für die Zwischenspeicherung der abgenommenen Daten aufweist.

9. Informationsabnahmesystem nach einem der Ansprüche l bis 8, dadurch gekennzeichnet, daß das Interface als steckbare Platine ausgebildet und in dem Gehäuse des Schreibautomaten, des elektronischen Rechners oder der Tastatur (l) des Rechners untergebracht ist.

FIGUR 1

SEHBEHINDERTEN-ENDGERÄT

SCHREIBAUTOMAT

INTERFACE

SEHBEHINDERTEN-ENDGERÄT

FIGUR 2